# EUROPEAN PATENT SPECIFICATION

(11) **EP 2 622 877 B1**
(45) Date of publication and mention of the grant of the patent: **25.10.2017**
(21) Application number: 11829690.4
(22) Date of filing: 27.09.2011
(51) Int. Cl.: H04R 5/00, H04R 5/02, H04B 7/00, G10K 11/22, H04R 1/10

(54) **AN AUDIO REPRODUCTION DEVICE AND A METHOD FOR USING THE AFOREMENTIONED DEVICE**
AUDIOWIEDERGABEVORRICHTUNG UND VERFAHREN ZUR VERWENDUNG DIESER VORRICHTUNG
DISPOSITIF DE REPRODUCTION AUDIO, ET PROCÉDÉ D'UTILISATION DUDIT DISPOSITIF

(30) Priority: 01.10.2010 US 896730
(43) Date of publication of application: 07.08.2013
(73) Proprietor: Creative Technology Ltd., Singapore 609921 (SG)
(72) Inventor: SIM, Wong Hoo, Singapore 679123 (SG); CHANG, Thean Kuie, Christopher, Singapore 643683 (SG)
(74) Representative: Talbot-Ponsonby, Daniel Frederick
(86) International application number: PCT/SG2011/000335
(87) International publication number: WO 2012/044254

(56) References cited:
- EP-A2- 0 360 517
- GB-A- 1 352 883
- US-A- 431 810
- US-A1- 2004 037 444
- US-A1- 2008 130 924
- US-B1- 6 961 440
- Holger Hiebel: "Das Kundtsche Rohr - Matlab-Simulation unter Berücksichtigung von Mehrfachreflexionen", , 1 October 2005 (2005-10-01), XP055176435, Retrieved from the Internet: URL:http://portal.tugraz.at/portal/page/po rtal/Files/audiotechnik/Lehre/fertige%20BA %20PA%20DA/PA_Hiebel-Kundtsches_Rohr_mit_M ehrfachreflexion.pdf [retrieved on 2015-03-13]

## Description

### FIELD OF INVENTION

The present invention relates to the field of audio reproduction, particularly, an audio reproduction device and a method for using the audio reproduction device.

### BACKGROUND

It is a common practice that personal audio reproduction devices such as, for example, headphones and earphones typically require at least one driver (transducer) for each ear such that audio is transmitted directly into each ear of a user from the drivers. This enables the user to perceive the audio in a stereo manner, and the audio transmitted into each ear allows the user to achieve a sense of aural balance.

However, it should be noted that complexities of construction, power consumption, and weight of the personal audio reproduction devices all correspondingly increase in proportion with a number of drivers used in each of the personal audio reproduction devices. Given that the personal audio reproduction devices are usually portable and commonly used in such a manner, it would be desirable if the weight of the devices could be minimized. Furthermore, it would be desirable if the power consumption by the personal audio reproduction devices were minimized since the personal audio reproduction devices are typically connected to portable devices with limited power capacity to provide power for both the portable devices and the personal audio reproduction devices over an extended duration of time. Moreover, it is also desirable if the construction was not overly complex so that the personal audio reproduction devices are more robust.

In view of the aforementioned issues, it would be desirable if complexities of construction, weight and power consumption of the personal audio reproduction devices could be minimized without adversely affecting the usability of the personal audio reproduction devices. US2004/037444 discloses a lightweight communications headset, US431810 discloses an attachment for telephone receivers and EP0360517 discloses sound reproduction apparatus.

### SUMMARY

In a first aspect, there is provided an audio reproduction device capable of providing audio output through at least one output member. The audio reproduction device includes a left output member for transmission of audio, the left output member being able to fit into a user's first ear; a transducer for converting input audio signals into audio output, the transducer being located within the left output member; an acoustic tube coupled to the left output member for transmission of audio from the transducer, a first end of the acoustic tube being coupled to the left output member; and a right output member for transmission of audio, the right output member being able to fit into the user's second ear, a second end of the acoustic tube being coupled to the right output member. The audio output is transmitted from the transducer through the acoustic tube to the right output member, and the first end of the acoustic tube is removable from the left output member and the second end of the acoustic tube is removable from the right output member, such that the right output member is removable from the audio reproduction device so that the user is provided with an option of receiving transmission of audio without the acoustic tube and right output member dangling from the audio reproduction device.

The audio reproduction device may also include a wireless receiver coupled to the transducer to receive input audio signals. The input of audio signals may be received by the transducer via either a physical connection or a wireless connection. The wireless receiver may employ a wireless technology such as, for example, infra-red, RF, Bluetooth and so forth. The audio reproduction device may also include a power source coupled to the transducer, the power source being for powering the transducer.

It is advantageous that varying the acoustic tube affects the audio output transmitted to the right output member, the audio output being affected by
either phase shift or attenuation. The varying of the acoustic tube may be carried out by varying either a length or a material of the acoustic tube.

It is preferable that both the left output member and the right output member allow ambient sounds to enter the user's first and second ears respectively.

In a second aspect, there is provided a method for using an audio reproduction device capable of providing audio output through at least one output member. The method includes receiving input audio signals at a transducer for converting the input audio signals to produce audio output; powering the transducer to produce the audio output, the transducer being located within a left output member, the left output member being able to fit into a user's first ear; and coupling a first end of an acoustic tube to the left output member, a second end of the acoustic tube being coupled to a right output member, the right output member being able to fit into the user's second ear, with the acoustic tube being for transmission of audio from the transducer. The audio output is transmitted from the transducer through the acoustic tube to the right output member, and the first end of the acoustic tube is removable from the left output member and the second end of the acoustic tube is removable from the right output member, such that the right output member is removable from the audio reproduction device so as to provide the user with an option of receiving transmission of audio without the acoustic tube and right output member dangling from the audio reproduction device.

The input audio signals may be received at the transducer via either a physical connection or a wireless connection. The wireless connection may employ a wireless technology such as, for example, infra-red, RF, Bluetooth and so forth.

It is advantageous that varying the acoustic tube affects the audio output transmitted to the right output member, the audio output being affected by either phase shift or attenuation. The variation of the acoustic tube may be carried out by varying either a length or a material of the acoustic tube.

It is preferable that both the left output member and the right output member allow ambient sounds to enter the user's first and second ears respectively.

### DESCRIPTION OF DRAWINGS

In order that the present invention may be fully understood and readily put into practical effect, there shall now be described by way of non-limitative example only preferred embodiments of the present invention, the description being with reference to the accompanying illustrative drawings.
Figure 1 shows a schematic view of a device of the present invention.
Figure 2 shows a process flow of a method of the present invention.

### DESCRIPTION OF PREFERRED EMBODIMENTS

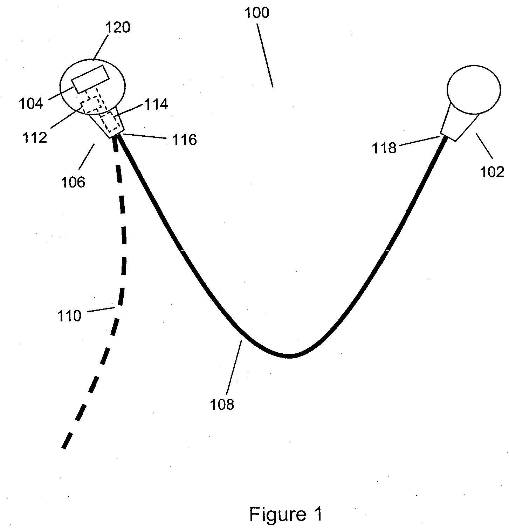

Referring to Figure 1 which shows a schematic view of an audio reproduction device 100, there is provided the audio reproduction device 100 which is capable of providing audio output through at least one output member. The at least one output member may be placed either at an entrance of a user's ear canal or within the user's ear canal. In the embodiment as shown in Figure 1, the audio reproduction device 100 is an earphone set. The audio reproduction device 100 may be used in a portable manner, and it would be preferable if the weight of the audio reproduction device 100 was minimized so as not to cause weight-based discomfort to a user of the audio reproduction device 100, particularly at the ears of the user. It should be appreciated that dotted lines of physical features in Figure 1 indicate a non-mandatory/an optional feature denoted in Figure 1.

The audio reproduction device 100 includes a left output member 106 for transmission of audio, the left output member 106 being able to fit into the user's first ear (not shown). The left output member 106 may allow ambient sounds to enter the user's first ear. This aspect may be beneficial during instances when the user needs to be consciously aware of the goings-on at the surroundings which the user is in. The audio reproduction device 100 may include a transducer 104 for converting input audio signals into audio output, the transducer 104 being directly coupled to the left output member 106. While the transducer 104 is shown to be located within a left casing 120 of the left output member 106 in Figure 1, it should be appreciated that the transducer 104 need not be located within the left casing 120 of the left output member 106.

There is also an acoustic tube 108 coupled to the left output member 106 for transmission of audio output from the transducer 104. A first end 116 of the acoustic tube 108 is coupled to the left output member 106. The coupling of the first end 116 of the acoustic tube 108 and the left output member 106 should be securable and not prone to un-intentional de-coupling during regular use. As such, the first end 116 of the acoustic tube 108 may employ securing mechanisms such as, for example, clips, jack-socket combination, Velcro strips, adhesive strips and so forth. It should be noted that the acoustic tube 108 is able to have different characteristics which affects the transmission of audio from the transducer 104. The acoustic tube 108 may have different characteristics due to varying either a length or a material of the acoustic tube 108. The acoustic tube 108 may affect, for example, an extent of phase shifting for the transmitted audio output, an extent of attenuation for the transmitted audio output and so forth. However, it should be appreciated that even though the audio output transmitted from the transducer 104 is affected by the acoustic tube 108, the effect on the audio output at the right output member 102 should not affect the sense of aural balance experienced by the user.

The audio reproduction device 100 also includes a right output member 102 for transmission of audio output, the right output member 102 being able to fit into the user's second ear (not shown). The right output member 102 may allow ambient sounds to enter the user's second ear. This aspect may be beneficial during instances when the user needs to be consciously aware of the goings-on at the surroundings which the user is in. A second end 118 of the acoustic tube 108 may be coupled to the right output member 102. The coupling of the second end 118 of the acoustic tube 108 and the right output member 102 should be securable and not prone to un-intentional de-coupling during regular use. As such, the second end 118 of the acoustic tube 108 may employ securing mechanisms such as, for example, clips, jack-socket combination, Velcro strips, adhesive strips and so forth. It should be noted that the second end 118 of the acoustic tube 108 may be affixed to the right output member 102 such that both the acoustic tube 108 and the right output member 102 form a single part of the audio reproduction device 100. In this regard, varying the acoustic tube 108 of the audio reproduction device 100 may also mean changing the right output member 102.

The transducer 104 of the audio reproduction device 100 may receive the input audio signals via either a physical connection or a wireless connection. The physical connection may be a cable 110. directly linked with the transducer 104, where the input audio signals are from a source of audio signals. The audio reproduction device 100 may also include a wireless receiver 112 coupled to the transducer 104 to receive input audio signals wirelessly from the source of audio signals. The wireless receiver 112 may employ a wireless technology of, for example, infra-red, RF, Bluetooth and so forth. It should be appreciated that the audio reproduction device 100 may include both the cable 110 and the wireless receiver 112 such that the user is able to choose between either the physical connection or the wireless connection for the input of audio signals.

Finally, the audio reproduction device 100 may also include a power source 114 coupled to the transducer 104 for powering the transducer 104 and other components of the audio reproduction device 100. It should be appreciated that the power source 114 may not be required if power for all the components of the audio reproduction device 100 is drawn from the source of audio signals via the cable 110.

It should be appreciated that the audio reproduction device 100 operates in a manner where the audio output is transmitted from the transducer 104 through the acoustic tube 108 to the right output member 102. It should be noted that the acoustic tube 108 and the right output member 102 is removable from the audio reproduction device 100 (either as a single part or separate parts). The removal of the right output member 102 may be carried out when the user desires audio output from a single output member. When the right output member 102 is removed from the audio reproduction device 100, audio output is provided by only the left output member 106 to the first ear of the user. This advantageously provides the user with an option to enjoy audio output though either only the left output member 106 or both the left output member 106 and the right output member 102. When the right output member 102 is removed, there is no instance of the right output member 102 being dangled from the audio reproduction device 100, as per instances involving typical earphones. In this regard, it is appreciated that the removal of the right output member 102 aids the user who wishes to listen to audio output from only the left output member 106 as the user avoids a need to deal with a dangling right output member 102.

It should be appreciated that the single transducer 104 aspect of the audio reproduction device 100 simplifies construction of the audio reproduction device 100, minimizes weight of the audio reproduction device 100 and also minimizes power consumption of the audio reproduction device 100. Furthermore, the audio reproduction device 100 is versatile as it is usable with only a single output member.

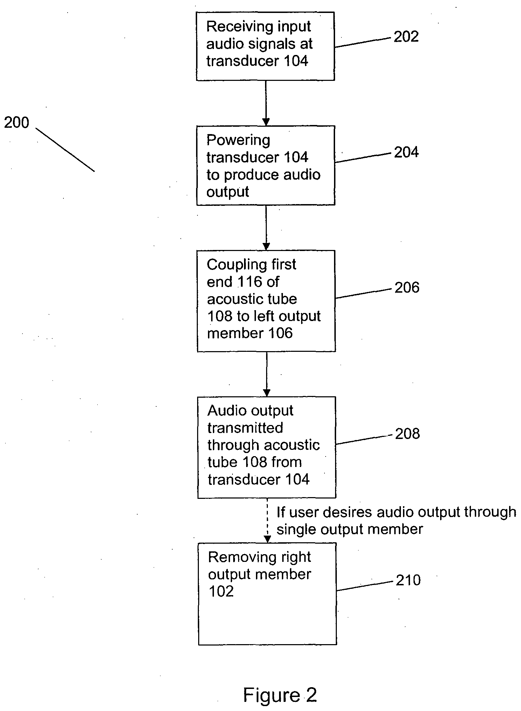

Referring to Figure 2, there is provided a method 200 for using an audio reproduction device such as the audio reproduction device 100 as described in the preceding paragraphs, where audio output is provided through at least one output member. The audio reproduction device 100 may be used in a portable manner, and it would be preferable if the weight of the audio reproduction devices 100 was minimized so as not to cause weight-based discomfort to a user of the audio reproduction device 100, particularly at the ears of the user.

In a preferred embodiment, the method 200 described with reference to the audio reproduction device 100 (for the sake of illustration) includes receiving input audio signals at the transducer 104 for converting the input audio signals to produce audio output (202). The transducer 104 may receive the input audio signals via either a physical connection or a wireless connection. The physical connection may be a cable 110 directly linked with the transducer 104, where the input audio signals are from a source of audio signals. The audio reproduction device 100 may also include a wireless receiver 112 coupled to the transducer 104 to receive input audio signals wirelessly from the source of audio signals. The wireless receiver 112 may employ a wireless technology such as, for example, infra-red, RF, Bluetooth and so forth. It should be appreciated that the audio reproduction device 100 may include both the cable 110 and the wireless receiver 112 such that the user is able to choose between either the physical connection or the wireless connection for the input of audio signals.

The method 200 also includes powering the transducer 104 to produce the audio output (204). The transducer 104 may be coupled to a left output member 106 which may be able to fit into the user's first ear. A power source may be coupled to the transducer 104, or power to the transducer 104 may be drawn from the source of audio signals via the cable 110. The left output member 106 may allow ambient sounds to enter the user's first ear. While the transducer 104 is shown to be located within a left casing 120 of the left output member 106 in Figure 1, it should be appreciated that the transducer 104 need not be located within the left casing 120 of the left output member 106.

The method 200 also includes coupling the first end 116 of the acoustic tube 108 to the left output member 106 (206). The second end 118 of the acoustic tube 108 may be being coupled to the right output member 102, the right output member 102 being able to fit into the user's second ear and the acoustic tube 108 is for transmission of audio from the transducer 104. The right output member 102 may allow ambient sounds to enter the user's second ear. The coupling of the first end 116 of the acoustic tube 108 and the left output member 106 should be securable and not prone to un-intentional de-coupling during regular use. As such, the first end 116 of the acoustic tube 108 may employ securing mechanisms such as, for example, clips, jack-socket combination, Velcro strips, adhesive strips and so forth. A coupling of the second end 118 of the acoustic tube 108 and the right output member 102 should also be securable and not prone to un-intentional de-coupling during regular use. As such, the second end 118 of the acoustic tube 108 may also employ securing mechanisms such as, for example, clips, jack-socket combination, Velcro strips, adhesive strips and so forth. It should be noted that the second end 118 of the acoustic tube 108 may be affixed to the right output member 102 such that both the acoustic tube 108 and the right output member 102 form a single part of the audio reproduction device 100. The output members 102, 106 may be placed either at an entrance of a user's ear canal or within the user's ear canal.

In the method 200, the audio output is transmitted through the acoustic tube 108 to the right output member 102 from the transducer 104 (208). It should be noted that the acoustic tube 108 is able to have different characteristics which affects the transmission of audio output from the transducer 104. The acoustic tube 108 may have different characteristics due to varying either a length or a material of the acoustic tube 108. The acoustic tube 108 may affect, for example, an extent of phase shifting for the transmitted audio, an extent of attenuation for the transmitted audio and so forth. However, it should be appreciated that even though the audio output transmitted from the transducer 104 is affected by the acoustic tube 108, the effect on the audio output at the right output member 102 should not affect the sense of aural balance experienced by the user.

Furthermore, in an instance when the user desires audio output from a single output member, the right output member 102 is also removable from the audio reproduction device 100 (210). It should be noted that the acoustic tube 108 and the right output member 102 is removable from the audio reproduction device 100 (either as a single part or separate parts). When the right output member 102 is removed from the audio reproduction device 100, audio output is provided by only the left output member 106 to the first ear of the user. This advantageously allows the user to enjoy audio output though either only the left output member 106 or both the left output member 106 and the right output member 102. When the right output member 102 is removed, there is no instance of the right output member 102 being dangled from the audio reproduction device 100, as per instances involving typical earphones. In this regard, it is appreciated that the removal of the right output member 102 aids the user who wishes to listen to audio output from the left output member 106 as the user avoids a need to deal with a dangling right output member 102.

It should be appreciated that the single transducer 104 aspect in relation to the method 200 enables simplification of construction of the audio reproduction device 100, minimizes weight of the audio reproduction device 100 and also minimizes power consumption of the audio reproduction device 100. Furthermore, the audio reproduction device 100 is versatile as it is usable with only a single output member.

Whilst there has been described in the foregoing description preferred embodiments of the present invention, it will be understood by those skilled in the technology concerned that many variations or modifications in details of design or construction may be made without departing from the present invention as defined in the appended claims.

## Claims

1. An audio reproduction device (100) capable of providing audio output through at least one output member, the audio reproduction device including:
a left output member (106) for transmission of audio, the left output member being able to fit into a user's first ear; and
a transducer (104) for converting input audio signals into audio output, the device **characterised by** the transducer being located within the left output member;
an acoustic tube (108) coupled to the left output member for transmission of audio from the transducer, a first end (116) of the acoustic tube being coupled to the left output member; and
a right output member (102) for transmission of audio, the right output member being able to fit into the user's second ear, a second end of the acoustic tube (118) being coupled to the right output member,
wherein the audio output is transmitted from the transducer through the acoustic tube to the right output member, and wherein the first end of the acoustic tube is removable from the left output member and the second end of the acoustic tube is removable from the right output member, such that the right output member is removable from the audio reproduction device so that the user is provided with an option of receiving transmission of audio without the acoustic tube and right output member dangling from the audio reproduction device.

2. The audio reproduction device of claim 1, further including a wireless receiver coupled to the transducer to receive input audio signals.

3. The audio reproduction device of claim 2, wherein the input audio signals are received by the transducer via either a physical connection or a wireless connection.

4. The audio reproduction device of claim 2, wherein the wireless receiver employs a wireless technology selected from a group comprising: infra-red, RF, and Bluetooth.

5. The audio reproduction device of claim 1, further including a power source coupled to the transducer, the power source being for powering the transducer.

6. The audio reproduction device of claim 1, wherein varying either a length or a material of the acoustic tube affects the audio output transmitted to the right output member, the audio output being affected by either phase shift or attenuation.

7. The audio reproduction device of claim 1, wherein both the left output member and the right output member allow ambient sounds to enter the user's first and second ears respectively.

8. A method for using an audio reproduction device (100) capable of providing audio output through at least one output member, the method including:
receiving input audio signals at a transducer (104) for converting the input audio signals to produce audio output;
powering the transducer to produce the audio output, the method **characterised by** the transducer being located within a left output member (106), the left output member being able to fit into a user's first ear; and
coupling a first end (116) of an acoustic tube (108) to the left output member, a second end (118) of the acoustic tube being coupled to a right output member (102), the right output member being able to fit into the user's second ear, with the acoustic tube being for transmission of audio from the transducer;
wherein the audio output is transmitted from the transducer through the acoustic tube to the right output member, and wherein the first end of the acoustic tube is removable from the left output member and the second end of the acoustic tube is removable from the right output member, such that the right output member is removable from the audio reproduction device so as to provide the user with an option of receiving transmission of audio without the acoustic tube and right output member dangling from the audio reproduction device.

9. The method of claim 8, wherein the input audio signals are received at the transducer via either a physical connection or a wireless connection.

10. The method of claim 9, wherein the wireless connection employs a wireless technology selected from a group comprising: infra-red, RF, and Bluetooth.

11. The method of claim 8, wherein varying the acoustic tube is carried out by varying either a length or a material of the acoustic tube and affects the audio output transmitted to the right output member, the audio output being affected by either phase shift or attenuation.

12. The method of claim 8, wherein both the left output member and the right output member allow ambient sounds to enter the user's first and second ears respectively.

## Patentansprüche

1. Tonwiedergabevorrichtung (100), die zum Bereitstellen von Tonausgabe durch mindestens ein Ausgabeelement imstande ist, wobei die Tonwiedergabevorrichtung aufweist:
ein linkes Ausgabeelement (106) zur Übertragung von Ton, wobei das linke Ausgabeelement imstande ist, in ein erstes Ohr eines Benutzers zu passen; und
einen Schallgeber (104) zum Umwandeln von Eingabetonsignalen in Tonausgabe, wobei die Vorrichtung **dadurch gekennzeichnet ist, dass** der Schallgeber innerhalb des linken Ausgabeelements angeordnet ist;
eine mit dem linken Ausgabeelement gekoppelte akustische Röhre (108) zur Übertragung von Ton vom Schallgeber, wobei ein erstes Ende (116) der akustischen Röhre mit dem linken Ausgabeelement gekoppelt ist; und
ein rechtes Ausgabeelement (102) zur Übertragung von Ton, wobei das rechte Ausgabeelement imstande ist, in das zweite Ohr des Benutzers zu passen, wobei ein zweites Ende (118) der akustischen Röhre mit dem rechten Ausgabeelement gekoppelt ist,
worin die Tonausgabe vom Schallgeber durch die akustische Röhre zum rechten Ausgabeelement übertragen wird, und worin das erste Ende der akustischen Röhre vom linken Ausgabeelement abnehmbar ist und das zweite Ende der akustischen Röhre vom rechten Ausgabeelement abnehmbar ist, sodass das rechte Ausgabeelement von der Tonwiedergabevorrichtung abnehmbar ist, sodass der Benutzer mit einer Option des Empfangens einer Tonübertragung versehen wird, ohne dass die akustische Röhre und das rechte Ausgabeelement von der Tonwiedergabevornchtung herabhängen.

2. Tonwiedergabevorrichtung nach Anspruch 1, ferner einen drahtlosen Empfänger aufweisend, der mit dem Schallgeber gekoppelt ist, um Eingabetonsignale zu empfangen.

3. Tonwiedergabevorrichtung nach Anspruch 2, worin die Eingabetonsignale durch den Schallgeber entweder über eine physische Verbindung oder über eine drahtlose Verbindung empfangen werden.

4. Tonwiedergabevorrichtung nach Anspruch 2, worin der drahtlose Empfänger eine drahtlose Technologie verwendet, die aus einer Gruppe ausgewählt wird, die Folgendes umfasst: Infrarot, Funkfrequenz und Bluetooth.

5. Tonwiedergabevorrichtung nach Anspruch 1, ferner eine Energiequelle aufweisend, die mit dem Schallgeber gekoppelt ist, wobei die Energiequelle zur Energieversorgung des Schallgebers dient.

6. Tonwiedergabevorrichtung nach Anspruch 1, worin das Variieren entweder einer Länge oder eines Materials der akustischen Röhre die zum rechten Ausgabeelement übertragene Tonausgabe beeinflusst, wobei die Tonausgabe entweder durch Phasenverschiebung oder durch Dämpfung beeinflusst wird.

7. Tonwiedergabevorrichtung nach Anspruch 1, worin sowohl das linke Ausgabeelement als auch das rechte Ausgabeelement ermöglichen, dass Umgebungsgeräusche in das erste bzw. zweite Ohr des Benutzers eintreten.

8. Verfahren zum Verwenden einer Tonwiedergabevorrichtung (100), die zum Bereitstellen von Tonausgabe durch mindestens ein Ausgabeelement imstande ist, wobei das Verfahren aufweist:
Empfangen von Eingabetonsignalen in einem Schallgeber (104) zum Umwandeln der Eingabetonsignale, um Tonausgabe zu erzeugen;
Versorgen des Schallgebers mit Energie, um die Tonausgabe zu erzeugen, wobei das Verfahren **dadurch gekennzeichnet ist, dass** der Schallgeber innerhalb eines linken Ausgabeelements (106) angeordnet ist, wobei das linke Ausgabeelement imstande ist, in ein erstes Ohr eines Benutzers zu passen; und
Koppeln eines ersten Endes (116) einer akustischen Röhre (108) mit dem linken Ausgabeelement, wobei ein zweites Ende (118) der akustischen Röhre mit einem rechten Ausgabeelement (102) gekoppelt wird, wobei das rechte Ausgabeelement imstande ist, in das zweite Ohr des Benutzers zu passen, wobei die akustische Röhre zur Übertragung von Ton vom Schallgeber dient,
worin die Tonausgabe vom Schallgeber durch die akustische Röhre zum rechten Ausgabeelement übertragen wird, und worin das erste Ende der akustischen Röhre vom linken Ausgabeelement abnehmbar ist und das zweite Ende der akustischen Röhre vom rechten Ausgabeelement abnehmbar ist, sodass das rechte Ausgabeelement von der Tonwiedergabevorrichtung abnehmbar ist, um dadurch den Benutzer mit einer Option des Empfangens einer Tonübertragung zu versehen, ohne dass die akustische Röhre und das rechte Ausgabeelement von der Tonwiedergabevorrichtung herabhängen.

9. Verfahren nach Anspruch 8, worin die Eingabetonsignale im Schallgeber entweder über eine physische Verbindung oder über eine drahtlose Verbindung empfangen werden.

10. Verfahren nach Anspruch 9, worin die drahtlose Verbindung eine drahtlose Technologie verwendet, die aus einer Gruppe ausgewählt wird, die Folgendes umfasst: Infrarot, Funkfrequenz und Bluetooth.

11. Verfahren nach Anspruch 8, worin das Variieren der akustischen Röhre durch Variieren entweder einer Länge oder eines Materials der akustischen Röhre vorgenommen wird und die zum rechten Ausgabeelement übertragene Tonausgabe beeinflusst, wobei die Tonausgabe entweder durch Phasenverschiebung oder durch Dämpfung beeinflusst wird.

12. Verfahren nach Anspruch 8, worin sowohl das linke Ausgabeelement als auch das rechte Ausgabeelement ermöglichen, dass Umgebungsgeräusche in das erste bzw. zweite Ohr des Benutzers eintreten.

## Revendications

1. Dispositif de reproduction audio (100) disposant de la capacité de fournir une sortie audio au travers d'au moins un élément de sortie, le dispositif de reproduction audio incluant :
un élément de sortie gauche (106) pour l'émission d'une information audio, l'élément de sortie gauche pouvant être adapté à l'intérieur d'une première oreille d'un utilisateur ; et
un transducteur (104) pour convertir des signaux audio d'entrée en une sortie audio, le dispositif étant **caractérisé en ce que** le transducteur est situé à l'intérieur de l'élément de sortie gauche ;
un tube acoustique (108) qui est couplé à l'élément de sortie gauche pour l'émission d'information audio depuis le transducteur, une première extrémité (116) du tube acoustique étant couplée à l'élément de sortie gauche ; et
un élément de sortie droit (102) pour l'émission d'information audio, l'élément de sortie droit pouvant être adapté à l'intérieur d'une seconde oreille de l'utilisateur, une seconde extrémité du tube acoustique (118) étant couplée à l'élément de sortie droit, dans lequel :
la sortie audio est émise depuis le transducteur au travers du tube acoustique jusqu'à l'élément de sortie droit, et dans lequel la première extrémité du tube acoustique peut être enlevée de l'élément de sortie gauche et la seconde extrémité du tube acoustique peut être enlevée de l'élément de sortie droit, de telle sorte que l'élément de sortie droit puisse être enlevé du dispositif de reproduction audio de telle sorte que l'utilisateur soit muni d'une option de réception de l'émission d'information audio sans que le tube acoustique et l'élément de sortie droit ne pendent du dispositif de reproduction audio.

2. Dispositif de reproduction audio selon la revendication 1, incluant en outre un récepteur sans fil qui est couplé au transducteur de manière à recevoir des signaux audio d'entrée.

3. Dispositif de reproduction audio selon la revendication 2, dans lequel les signaux audio d'entrée sont reçus par le transducteur via soit une connexion physique, soit une connexion sans fil.

4. Dispositif de reproduction audio selon la revendication 2, dans lequel le récepteur sans fil utilise une technologie sans fil qui est sélectionnée parmi un groupe qui comprend : les infrarouges, les RF et Bluetooth.

5. Dispositif de reproduction audio selon la revendication 1, incluant en outre une source d'alimentation qui est couplée au transducteur, la source alimentation étant prévue pour alimenter le transducteur.

6. Dispositif de reproduction audio selon la revendication 1, dans lequel le fait de modifier soit une longueur, soit un matériau du tube acoustique affecte la sortie audio qui est émise sur l'élément de sortie droit, la sortie audio étant affectée par soit un déphasage, soit une atténuation.

7. Dispositif de reproduction audio selon la revendication 1, dans lequel l'élément de sortie gauche et l'élément de sortie droit permettent tous deux que des sons ambiants pénètrent respectivement à l'intérieur des première et seconde oreilles de l'utilisateur.

8. Procédé pour utiliser un dispositif de reproduction audio (100) disposant de la capacité de fournir une sortie audio au travers d'au moins un élément de sortie, le procédé incluant :
la réception de signaux audio d'entrée au niveau d'un transducteur (104) pour convertir les signaux audio d'entrée de manière à produire une sortie audio ;
l'alimentation du transducteur de manière à produire la sortie audio, le procédé étant **caractérisé en ce que** le transducteur est situé à l'intérieur d'un élément de sortie gauche (106), l'élément de sortie gauche pouvant être adapté à l'intérieur d'une première oreille d'un utilisateur ; et
le couplage d'une première extrémité (116) d'un tube acoustique (108) sur l'élément de sortie gauche, une seconde extrémité (118) du tube acoustique étant couplée à un élément de sortie droit (102), l'élément de sortie droit pouvant être adapté à l'intérieur de la seconde oreille de l'utilisateur, le tube acoustique étant prévu pour l'émission d'une information audio depuis le transducteur ; dans lequel :
la sortie audio est émise depuis le transducteur au travers du tube acoustique jusqu'à l'élément de sortie droit ; et dans lequel :
la première extrémité du tube acoustique peut être enlevée de l'élément de sortie gauche et la seconde extrémité du tube acoustique peut être enlevée de l'élément de sortie droit, de telle sorte que l'élément de sortie droit puisse être enlevé du dispositif de reproduction audio de manière à munir l'utilisateur d'une option de réception de l'émission d'information audio sans que le tube acoustique et l'élément de sortie droit ne pendent du dispositif de reproduction audio.

9. Procédé selon la revendication 8, dans lequel les signaux audio d'entrée sont reçus au niveau du transducteur via soit une connexion physique, soit une connexion sans fil.

10. Procédé selon la revendication 9, dans lequel la connexion sans fil utilise une technologie sans fil qui est sélectionnée parmi un groupe qui comprend : les infrarouges, les RF et Bluetooth.

11. Procédé selon la revendication 8, dans lequel la modification du tube acoustique est mise en oeuvre en modifiant soit une longueur, soit un matériau du tube acoustique et elle affecte la sortie audio qui est émise sur l'élément de sortie droit, la sortie audio étant affectée par soit un déphasage, soit une atténuation.

12. Procédé selon la revendication 8, dans lequel l'élément de sortie gauche et l'élément de sortie droit permettent tous deux que des sons ambiants pénètrent respectivement à l'intérieur des première et seconde oreilles de l'utilisateur.
